# EUROPEAN PATENT APPLICATION

(11) **EP 4 059 343 A1**
(43) Date of publication of application: **21.09.2022**
(21) Application number: 20896179.7
(22) Date of filing: 03.12.2020
(51) Int. Cl.: A01K 31/04

(54) **POULTRY PEN, AND METHOD FOR PROCESSING POULTRY MANURE GENERATED IN POULTRY PEN**

(30) Priority: 05.12.2019 JP 2019220509
(71) Applicant: Nakajima Seisakusho Co., Ltd., Nagano-shi, Nagano, 388-8004 (JP)
(72) Inventor: ONDA Koji, Nagano-shi, Nagano 388-8004 (JP); FUJIMORI Yoshitsugu, Tokorozawa-shi, Saitama 359-0024 (JP); SHINODA Isamu, Ueda-shi, Nagano 386-0504 (JP); MIYAKI Kiyoshi, Tokyo 104-0061 (JP)
(74) Representative: Haseltine Lake Kempner LLP
(86) International application number: PCT/JP2020/044960
(87) International publication number: WO 2021/112157

(57) **Abstract**

An object is to provide a poultry house for poultry farming, in which the generation of a bad smell due to poultry manure and manure dust can be prevented, the burden of removing poultry manure on poultry farm workers can be reduced, and the living environment of chickens is improved, and a method for processing poultry manure generated in the poultry house. As a means for solution, a poultry house (10) according to the present invention includes a reticulated floor (22) and a water-filled tank (24) that is provided under the floor and is filled with water inside so that poultry manure falling through the openings of the reticulated floor (22) is retained in water. In addition, in a method for processing poultry manure generated in the poultry house (10), the pH of water in the water-filled tank (24) is maintained within the range of 2 to 6 by adding an acidic substance into the water-filled tank (24). Further, at predetermined intervals, poultry manure retained in the water-filled tank (24) is discharged outside the water-filled tank (24) together with water, and the water-filled tank (24) is newly filled with water.

## Description

### Technical Field

The present invention relates to a poultry house, and a method for processing poultry manure generated in the poultry house.

### Background Art

Conventionally, young chickens for meat such as broilers are farmed by an all-in-all-out system in which a relatively large number of chicks are put in a poultry house all at once, released and reared, and then all chickens are shipped all at once (see PTL 1: Japanese Patent No. 5841512).

### Citation List

### Patent Literature

PTL 1: Japanese Patent No. 5841512

### Summary of Invention

### Technical Problem

In this all-in-all-out system, chickens are free range in the same section throughout the rearing period, and therefore, poultry manure accumulates on the floor of the poultry house. Therefore, it has a problem that an odor (mainly recognized as a bad smell, and therefore, hereinafter particularly referred to as "bad smell") due to poultry manure and manure dust is generated in the poultry house or around the poultry house. Further, chickens live on accumulated poultry manure, which also poses a problem in terms of animal welfare and diseases. In addition, the work of removing poultry manure accumulated in the poultry house after shipping chickens (after all-out) is heavy labor, and establishment of a technique for reducing the burden on poultry farm workers has been desired.

On the other hand, PTL 1 describes a poultry farming method in which an actinomycete and water are added to poultry manure accumulated in the poultry house after all-out, followed by stirring and primary fermentation, and thereafter chicks are put therein (all-in) to rear chickens, and after all-out, the primary fermentation process is performed again, and this is repeated thereafter.

However, this method cannot prevent the generation of a bad smell during the period from the excretion of poultry manure to the fermentation, and also has a problem that a bad smell of manure dust scattering from the floor surface and adhering to or falling on a place other than the floor surface cannot be prevented. In addition, since chickens live on poultry manure as in the past, the method has a problem also in terms of animal welfare and diseases.

Further, PTL 1 describes that when the accumulation (fermented product of poultry manure) in the poultry house reaches a predetermined height or more, a part of the accumulation is moved from the poultry house to a compost house to form compost by secondary fermentation. However, the work burden does not substantially change between when the accumulation is carried out and when accumulated poultry manure is removed after all-out by the conventional method, and it has a problem that the burden is not sufficiently reduced as a whole.

### Solution to Problem

The present invention has been accomplished in view of the above circumstances, and an object is to provide a poultry house for poultry farming, in which the generation of a bad smell due to poultry manure and manure dust can be prevented, the burden of removing poultry manure on poultry farm workers can be reduced, and the living environment of chickens is improved, and a method for processing poultry manure generated in the poultry house.

The present invention solves the above-mentioned problems by a means for solution as described below as an embodiment.

The poultry house according to the present invention is required to include a reticulated floor, and a water-filled tank that is provided under the floor and is filled with water inside so that poultry manure falling through the openings of the reticulated floor is retained in water.

This can prevent the generation of a bad smell due to poultry manure by allowing poultry manure to fall in the water-filled tank and retaining it in water. At the same time, the scattering of manure dust can be prevented, and therefore, the generation of a bad smell from the inside and outside of the poultry house due to manure dust can be prevented. In addition, poultry manure excreted on the floor falls under the floor, and rearing can be carried out on a clean floor from which poultry manure is always removed. Therefore, the living environment of chickens can be improved. Further, the work of removing poultry manure accumulated in the poultry house can be eliminated, and the burden on poultry farm workers can be reduced.

Further, it is preferred that in the water-filled tank, the bottom surface is formed obliquely to the horizontal direction, and a discharge port that can be opened and closed is provided at the lowermost position in the oblique direction, so that poultry manure descends along the bottom surface together with water and is discharged outside the water-filled tank through the discharge port. This can allow poultry manure retained in the water-filled tank to descend along the oblique plane together with water by the action of gravity and discharge it outside the water-filled tank through the discharge port.

Further, it is preferred that the pH of water in the water-filled tank is within the range of 2 to 6. This can prevent the generation of ammonia from a mixture of poultry manure and water in the water-filled tank and further suppress the generation of a bad smell from the water-filled tank.

Further, it is preferred that the inner surface of the water-filled tank is formed using an acid-resistant material. This can adjust the pH of water in the water-filled tank to be acidic, and can prevent the deterioration of the inner surface due to acidic water.

Further, it is preferred that a purifying tank connected to the discharge port of the water-filled tank, and a residue processing tank connected to the purifying tank are provided, and a mixture of poultry manure and water discharged from the water-filled tank is subjected to a purifying process by the purifying tank, and a residue after the purifying process is subjected to a composting process by the residue processing tank. This can remove water from the mixture of poultry manure and water discharged from the water-filled tank and recycle the residue as compost.

Further, it is preferred that water after the purifying process is supplied into the water-filled tank by a configuration in which the purifying tank and the water-filled tank are connected. This can reduce the cost by circulating water between the water-filled tank and the purifying tank and using it.

It is preferred that in a method for processing poultry manure generated in the poultry house according to the present invention, the pH of water in the water-filled tank is maintained within the range of 2 to 6 by adding an acidic substance into the water-filled tank. This can adjust the pH of water in the water-filled tank to a set value by a simple method of adding an acidic substance.

Further, it is preferred that at predetermined intervals, poultry manure retained in the water-filled tank is discharged outside the water-filled tank together with water, and the water-filled tank is newly filled with water. This can suppress the amount of poultry manure in the water-filled tank to a certain amount or less by removing the poultry manure from the water-filled tank at predetermined intervals, and also can replace water in the water-filled tank with new water at predetermined intervals. Accordingly, the inside of the water-filled tank can be made relatively clean. As a result, the generation of a bad smell from the water-filled tank can be further suppressed.

Further, it is preferred that a mixture of poultry manure and water discharged from the water-filled tank is subjected to a purifying process, and a residue after the purifying process is subjected to a composting process. This can remove water from the mixture of poultry manure and water discharged from the water-filled tank and recycle the residue as compost.

Further, it is preferred that a mixture of poultry manure and water discharged from the water-filled tank is subjected to a purifying process, and water after the purifying process is supplied into the water-filled tank as new water, and excess water is discharged as sewage. This can reduce the cost by repeatedly using water in the water-filled tank.

Further, it is preferred that a mixture of poultry manure and water discharged from the water-filled tank is subjected to a fermentation process. This can recycle poultry manure as a biomass resource by various fermentation processes.

### Advantageous Effects of Invention

According to the present invention, in a poultry house for poultry farming, the generation of a bad smell due to poultry manure and manure dust can be prevented, and also the burden of removing poultry manure on poultry farm workers can be reduced, and further, the living environment of chickens can be improved. In addition, poultry manure generated in the poultry house according to the present invention can be processed based on the structure of the poultry house.

### Brief Description of Drawings

Fig. 1 is a schematic view (front sectional view) showing an example of a poultry house according to an embodiment of the present invention.
Fig. 2 is a schematic view (front sectional view) showing another example of a poultry house according to an embodiment of the present invention.
Fig. 3 is a flowchart showing an example of a method for processing poultry manure generated in the poultry house shown in Fig. 1.
Fig. 4 is a flowchart showing an example of a method for processing poultry manure generated in the poultry house shown in Fig. 2.

### Description of Embodiments

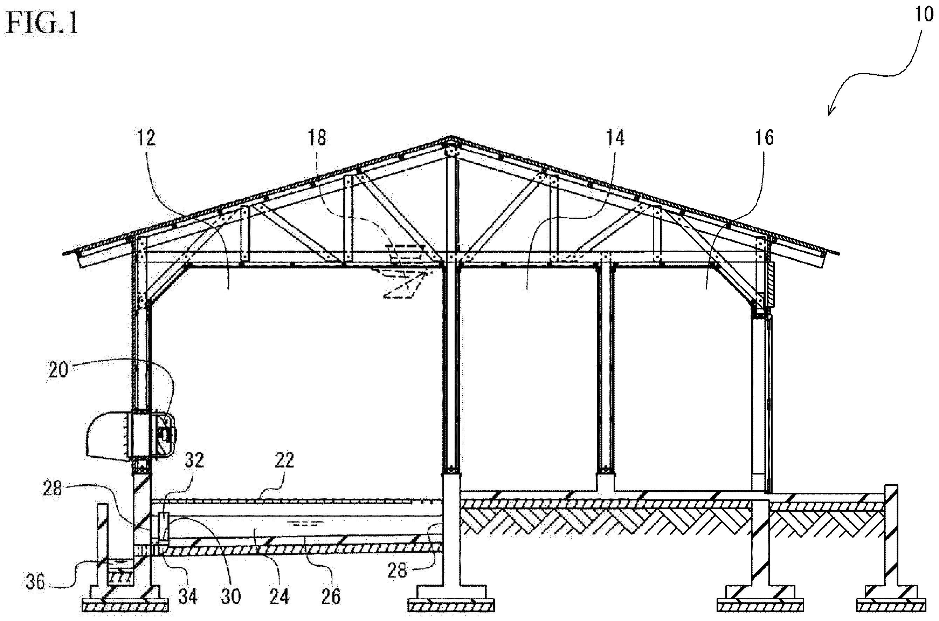

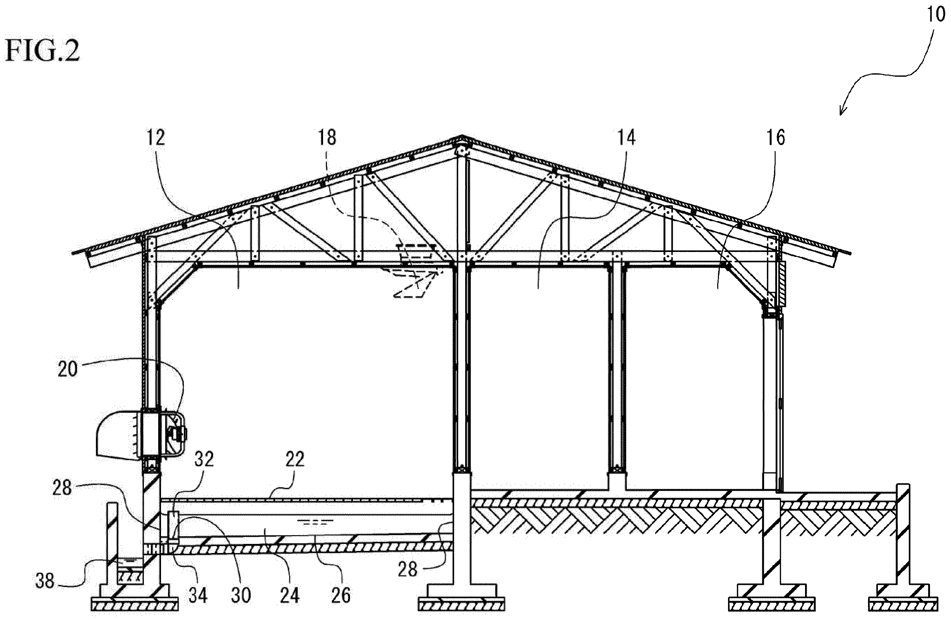

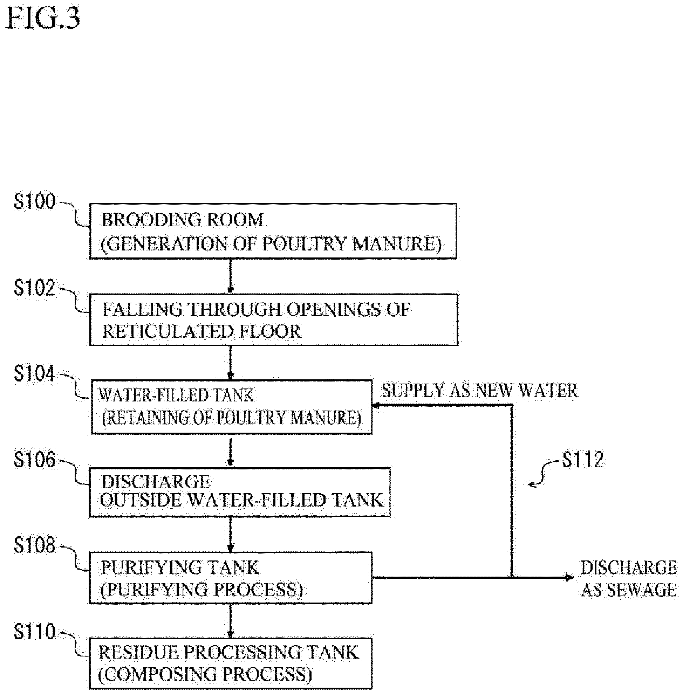

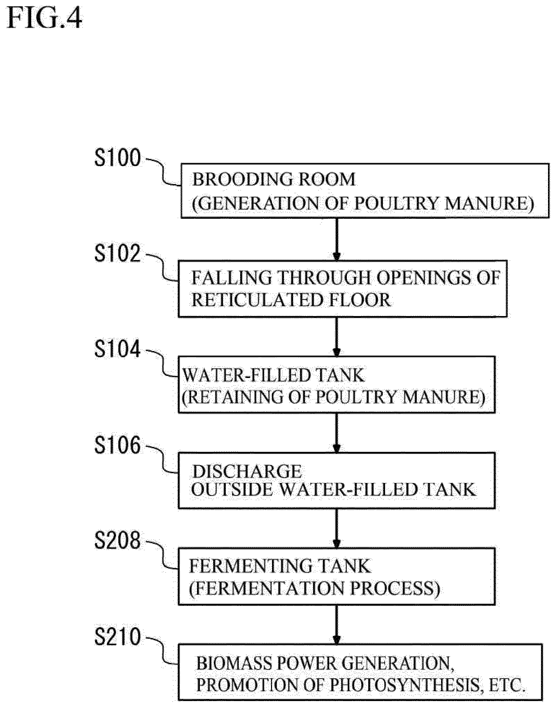

Hereinafter, embodiments of the present invention will be described in detail referring to the drawings. Fig. 1 shows a schematic view (front sectional view) of an example of a poultry house 10 according to the present embodiment. Fig. 2 shows a schematic view (front sectional view) of another example of the poultry house 10 according to the present embodiment. Further, Fig. 3 shows a flowchart of an example of a method for processing poultry manure generated in the poultry house 10 shown in Fig. 1. Further, Fig. 4 shows a flowchart of an example of a method for processing poultry manure generated in the poultry house 10 shown in Fig. 2. The "method for processing poultry manure" means a method relating to a series of processes to be performed for poultry manure after excretion and includes a method of controlling water in a water-filled tank 24 in which poultry manure is retained, and the like. Further, in all the drawings, members having the same function are assigned the same reference numerals, and their repeated description is sometimes omitted.

In the present embodiment, among the poultry houses 10 for poultry farming, the poultry house 10 used in a free-range breeding system (including the above-mentioned all-in-all-out system) in which a certain number of chickens are released and reared in a certain section (in the case of the present embodiment, a brooding room 12) will be described as an example. However, the present invention can also be suitably applied to, for example, a poultry house used in a cage breeding system in which a plurality of cages each housing one to about several chickens are arranged in a certain section (the brooding room 12 or the like) and rearing is performed.

### (Poultry House)

As shown in Fig. 1, the poultry house 10 according to the present embodiment includes the brooding room 12 in which poultry farming is performed, and is further provided with an anterior room 14 and a corridor 16 and the like as appropriate.

In the brooding room 12, for example, in the case of broilers, about 55 to 60 chicks (chickens) are housed and reared per *tsubo* (an area of about 3.3 m²). Further, as an example, a configuration in which a ventilation port 18 is provided on the ceiling and a ventilation fan 20 is provided on the side wall so as to allow ventilation inside and outside is adopted. The structure, number, and position of ventilation facilities (18, 20) are not limited, and they may be appropriately provided according to the size, height, and the like of the brooding room 12.

In addition, the floor 22 of the brooding room 12 is reticulated. According to this configuration, excreted poultry manure can be allowed to fall under the floor through the openings of the reticulated floor 22 and immediately removed. Therefore, since chickens reared on poultry manure in the past can be reared on the clean floor 22 from which poultry manure is always removed, the living environment of chickens can be improved. In the case of cage breeding, the floor (bottom surface) of the cage may be reticulated together with the floor 22 of the brooding room 12. This can allow poultry manure to fall through the openings of the reticulated cage and then to fall under the floor from the floor 22.

The material of the floor 22 is not limited. In the present embodiment, it is formed using a synthetic resin material, but it may be formed using, for example, a metal material. In addition, the shape and size of the opening may be appropriately set in consideration of the bodily structure and the like according to the type of chicken.

Further, a configuration in which the water-filled tank 24 is provided under the floor of the brooding room 12, and water can be supplied into the water-filled tank 24 from a water supply unit (not shown) is adopted. According to this configuration, the inside of the water-filled tank 24 can be always kept filled with water. Therefore, poultry manure falling through the openings of the reticulated floor 22 is allowed to fall in the water-filled tank 24 and can be retained in water. As a result, the generation of a bad smell due to poultry manure can be prevented. In addition, the scattering of manure dust can be prevented, and therefore, it is possible to prevent the generation of a bad smell from the inside and outside of the poultry house 10 due to manure dust reaching a place where removal is difficult in the poultry house 10 such as above the ceiling or the outside of the poultry house 10. Further, the work of removing poultry manure accumulated in the poultry house 10 can be eliminated so that the burden on poultry farm workers can be reduced.

Further, the inner surface (bottom surface 26 and side surface 28) of the water-filled tank 24 is formed using an acid-resistant material. In the present embodiment, as an example, a configuration in which the surface is coated with an acid-resistant material (for example, an epoxy resin, an acid-resistant ceramic, or the like) is adopted, but the constituent member of the water-filled tank 24 itself may be formed using an acid-resistant material. According to this configuration, the pH of water in the water-filled tank 24 can be adjusted to be acidic. Specifically, the pH of water in the water-filled tank 24 can be adjusted within the range of about 2 to 6 by adding an acidic substance, or the like, and the deterioration of the inner surface of the water-filled tank 24 due to the acidic water can be prevented.

Further, in the water-filled tank 24, the bottom surface 26 is formed obliquely to the horizontal direction, and a discharge port 30 that can be opened and closed is provided at the lowermost position in the oblique direction. The "lowermost position in the oblique direction" includes the position of a corner between the bottom surface 26 and the side surface 28 of the water-filled tank 24 of the lowermost portion in the oblique direction, and the position of the bottom surface 26 and the position of the side surface 28 therearound. In the present embodiment, as an example, a configuration in which the discharge port 30 is provided at the position of the bottom surface 26 around the position of the corner between the bottom surface 26 and the side surface 28 of the water-filled tank 24 of the lowermost portion in the oblique direction, and also to the discharge port 30, an overflow pipe 32 protruding upward is attached, and the discharge port 30 can be opened and closed by attaching and detaching the overflow pipe 32 is adopted.

According to this configuration, poultry manure retained in the water-filled tank 24 is allowed to descend along the oblique plane together with water by the action of gravity and can be discharged outside the water-filled tank 24 through the discharge port 30. Further, according to the present embodiment, poultry manure in the water-filled tank 24 can be simply discharged to the water-filled tank 24 together with water by detaching the overflow pipe 32, and also the overflow of water filled in the water-filled tank 24 can be prevented in a state where the overflow pipe 32 is attached. Therefore, for example, the floor 22 of the poultry house 10 can be prevented from being flooded by the overflow of water filled in the water-filled tank 24.

In the present embodiment, a configuration in which the supply and discharge of water in the water-filled tank 24 (the water supply unit and the opening/closing operation of the discharge port 30) are performed by a worker is adopted, but a configuration in which the supply and discharge are performed by the control of a control unit may be adopted. In this case, the control unit is composed of a CPU and a memory, and operates based on a preset operation program and a setting signal input from an operation unit. Therefore, for example, a configuration in which water in the water-filled tank 24 is replaced at predetermined intervals by the control of the control unit, a configuration in which water is replaced when the pH of water in the water-filled tank 24 has reached a predetermined value, or the like may be adopted.

Further, the poultry house 10 is provided with a purifying tank 36 connected to the discharge port 30 of the water-filled tank 24 via a discharge pipe 34, and further provided with a residue processing tank (not shown) connected to the purifying tank 36 as an example. This can remove water from the mixture of poultry manure and water discharged from the water-filled tank 24 and recycle the residue as compost. Specifically, a configuration in which the mixture of poultry manure and water discharged from the water-filled tank 24 is subjected to a purifying process by the purifying tank 36, and a residue after the purifying process is subjected to a composting process by the residue processing tank, or the like may be adopted. In this case, the purifying tank 36 may be, for example, a known sewage processing tank, and the residue may be composted using the residue processing tank as, for example, a fermenting tank utilizing nitrifying bacteria (nitrite bacteria and nitrate bacteria) or actinomycetes. Water after the purifying process may be discharged as sewage or supplied as new water into the water-filled tank 24 by a configuration in which the purifying tank 36 and the water-filled tank 24 are connected. This can reduce the cost by circulating water between the water-filled tank 24 and the purifying tank 36 and using it.

Further, as shown in Fig. 2, as another example, a configuration in which a fermenting tank 38 connected to the discharge port 30 of the water-filled tank 24 via the discharge pipe 34 is provided may be adopted. This can recycle poultry manure as a biomass resource by various fermentation processes. Specifically, by configuring the fermenting tank 38 as, for example, a hydrogen fermenting tank using a hydrogen-producing bacterium or a methane fermenting tank using a methanogen, biomass power generation can be performed using hydrogen or methane gas obtained respectively. Further, by configuring the fermenting tank 38 as, for example, a carbon dioxide separation tank, the obtained carbon dioxide can be used for promoting photosynthesis of crops in greenhouse cultivation. Further, a configuration in which after the residue processed in such a hydrogen fermenting tank or the like is detoxified with, for example, intestinal bacteria or the like of a giant panda by providing a detoxification tank or the like as appropriate, a solid substance is composted and water is discharged as sewage or supplied into the water-filled tank 24 as new water may be adopted.

Further, a configuration in which the purifying tank 36 shown in Fig. 1 and the fermenting tank 38 shown in Fig. 2 are combined may be adopted. Specifically, as an example, a configuration in which the respective tanks are connected in the order of the water-filled tank 24, the fermenting tank 38, the purifying tank 36, and the residue processing tank can be adopted. In this case, the mixture of poultry manure and water discharged from the water-filled tank 24 is subjected to a fermentation process by the fermenting tank 38 to take out an energy source or the like, followed by a purifying process by the purifying tank 36, and the residue after the purifying process is subjected to a composting process by the residue processing tank.

### (Method for Processing Poultry Manure)

Next, a method for processing poultry manure generated in the poultry house 10 (the poultry house 10 shown in Figs. 1 and 2) according to the present embodiment will be described. As shown in Figs. 3 and 4, poultry manure is generated in the poultry house 10 (brooding room 12) due to excretion by chickens (S100). Subsequently, poultry manure is allowed to fall in the water-filled tank 24 through the openings of the reticulated floor 22 of the brooding room 12 (S 102), and retained in water filled in the water-filled tank 24 (S 104). Subsequently, the discharge port 30 is opened (in the present embodiment, the overflow pipe 32 is detached), and the poultry manure retained in the water-filled tank 24 is discharged outside the water-filled tank 24 together with water (S 106).

Here, in the case of the poultry house 10 of the example shown in Fig. 1, as shown in Fig. 3, a mixture of poultry manure and water discharged from the water-filled tank 24 is allowed to flow in, for example, the purifying tank 36 and subjected to a purifying process in the purifying tank 36 (S108). Subsequently, the residue after the purifying process is allowed to flow in, for example, the residue processing tank and subjected to a composting process in the residue processing tank (S110).

On the other hand, in the case of the poultry house 10 of another example shown in Fig. 2, as shown in Fig. 4, a mixture of poultry manure and water discharged from the water-filled tank 24 is allowed to flow in, for example, the fermenting tank 38, and subjected to a fermentation process in the fermenting tank 38 (S208). Subsequently, the gas (for example, H2, CH₄, or CO₂) or the like obtained by the fermentation process is used for biomass power generation or promotion of photosynthesis of crops in greenhouse cultivation (S210).

In the above method for processing poultry manure according to the present embodiment (methods shown in Figs. 3 and 4), the generation of a bad smell due to poultry manure can be prevented by allowing poultry manure falling through the openings of the reticulated floor 22 to fall in the water-filled tank 24 and retaining it in water. At the same time, the scattering of manure dust can be prevented, and therefore, the generation of a bad smell due to the manure dust can be prevented.

Further, in the method according to the present embodiment, the pH of water in the water-filled tank 24 is maintained within the range of 2 to 6 by adding an acidic substance into the water-filled tank 24. This can prevent the generation of ammonia from the mixture of poultry manure and water in the water-filled tank 24 and further suppress the generation of a bad smell from the water-filled tank 24. Further, the pH of water in the water-filled tank 24 can be adjusted to a set value by a simple method of adding an acidic substance. The type of the acidic substance is not limited, but it is desirably a non-volatile organic acid or inorganic acid from the viewpoint of safety and the odor of the acid itself. In the case of the present embodiment, citric acid is used as the acidic substance, and a worker shall perform the addition. On the other hand, for example, a method of automatically performing the addition may be adopted by configuring the poultry house 10 such that the acidic substance is added so as to maintain the pH of water in the water-filled tank 24 within the range of 2 to 6 in response to a signal from a pH sensor provided in the water-filled tank 24 under the control of the control unit.

Further, in the method according to the present embodiment, at predetermined intervals, poultry manure retained in the water-filled tank 24 is discharged outside the water-filled tank 24 together with water, and the water-filled tank 24 is newly filled with water. This can suppress the amount of poultry manure in the water-filled tank 24 to a certain amount or less by removing the poultry manure from the water-filled tank 24 at predetermined intervals, and also can replace water in the water-filled tank 24 with new water at predetermined intervals. Accordingly, the inside of the water-filled tank 24 can be made relatively clean. As a result, the generation of a bad smell from the water-filled tank 24 can be further suppressed.

Here, in the present embodiment, as shown in Fig. 3, in the poultry house 10 of the example shown in Fig. 1, water after the purifying process in the purifying tank 36 is supplied into the water-filled tank 24 as new water, and excess water is discharged as sewage (S 112). This can reduce the cost by repeatedly using water in the water-filled tank 24. Further, also in the case of the poultry house 10 of another example shown in Fig. 2, for example, the residue after the fermentation process in the fermenting tank 38 is detoxified with intestinal bacteria or the like of a giant panda, and thereafter, a solid substance is composted, and water is supplied into the water-filled tank 24 as new water, and excess water may be discharged as sewage.

In addition, in the method according to the present embodiment, the temperature of water in the water-filled tank 24 may be maintained within a predetermined temperature range (for example, about 20 to 30 [°C]). This makes it difficult to generate a gas by maintaining the temperature of water at a relatively low temperature so as to be able to further suppress the generation of a bad smell from the water-filled tank 24. Further, the inside of the poultry house 10 may be aerated with ozone or the inside of the water-filled tank 24 may be exposed to ozone. This can sterilize the inside of the poultry house 10 and the water-filled tank 24, and also can suppress the generation of hydrogen sulfide or the like, and as a result, the generation of a bad smell can be further suppressed.

As described above, the poultry house according to the present invention is an environment-type water-filled poultry house that is completely different from the conventional poultry house. Originally, poultry manure has a characteristic that the water content is lower than that of other livestock manure, and therefore is relatively easily composted, and further, measures of incineration as waste are easily taken. Therefore, the idea of allowing poultry manure with a low water content to fall into water has never been considered so far. On the other hand, according to the present invention, an odor can be blocked by allowing poultry manure to fall into water and retaining it therein, and the generation of a bad smell due to poultry manure and manure dust can be prevented, and at the same time, the living environment of chickens can be improved. Therefore, the welfare of chickens can be improved, and the occurrence of diseases can be suppressed.

Further, according to the present invention, the work of removing poultry manure accumulated in the poultry house can be eliminated, and the burden on poultry farm workers can be reduced. In addition, by eliminating the work of removing manure, the closed period from the shipment of chickens to the arrival of new chicks can be shortened, and therefore, an economical effect that the production can be improved by increasing the yearly rate of turnover can also be obtained.

The present invention is not limited to Examples described above, and various modifications can be made without departing from the present invention. In particular, although edible chickens have been mentioned in many examples in the description of the present invention, the poultry house and the method for processing poultry manure according to the present invention can also be applied to egg laying hens.

## Claims

1. A poultry house, **characterized by** comprising:
a reticulated floor; and
a water-filled tank that is provided under the floor and is filled with water inside so that poultry manure falling through the openings of the reticulated floor is retained in water.

2. The poultry house according to claim 1, **characterized in that** in the water-filled tank, the bottom surface is formed obliquely to the horizontal direction, and a discharge port that can be opened and closed is provided at the lowermost position in the oblique direction, so that poultry manure descends along the bottom surface together with water and is discharged outside the water-filled tank through the discharge port.

3. The poultry house according to claim 1 or 2, **characterized in that** the pH of water in the water-filled tank is within the range of 2 to 6.

4. The poultry house according to claim 3, **characterized in that** the inner surface of the water-filled tank is formed using an acid-resistant material.

5. The poultry house according to claim 2, **characterized in that** the poultry house is provided with
a purifying tank connected to the discharge port of the water-filled tank, and
a residue processing tank connected to the purifying tank, and
a mixture of poultry manure and water discharged from the water-filled tank is subjected to a purifying process by the purifying tank, and a residue after the purifying process is subjected to a composting process by the residue processing tank.

6. The poultry house according to claim 5, **characterized in that** water after the purifying process is supplied into the water-filled tank by a configuration in which the purifying tank and the water-filled tank are connected.

7. A method for processing poultry manure generated in the poultry house according to any one of claims 1 to 6, **characterized in that**
the pH of water in the water-filled tank is maintained within the range of 2 to 6 by adding an acidic substance into the water-filled tank.

8. A method for processing poultry manure generated in the poultry house according to any one of claims 1 to 6, **characterized in that**
at predetermined intervals, poultry manure retained in the water-filled tank is discharged outside the water-filled tank together with water, and the water-filled tank is newly filled with water.

9. A method for processing poultry manure generated in the poultry house according to any one of claims 1 to 6, **characterized in that**
a mixture of poultry manure and water discharged from the water-filled tank is subjected to a purifying process, and a residue after the purifying process is subjected to a composting process.

10. A method for processing poultry manure generated in the poultry house according to any one of claims 1 to 6, **characterized in that**
a mixture of poultry manure and water discharged from the water-filled tank is subjected to a purifying process, and water after the purifying process is supplied into the water-filled tank as new water, and excess water is discharged as sewage.

11. A method for processing poultry manure generated in the poultry house according to any one of claims 1 to 4, **characterized in that**
a mixture of poultry manure and water discharged from the water-filled tank is subjected to a fermentation process.
